# EUROPEAN PATENT SPECIFICATION

(11) **EP 1 434 961 B1**
(45) Date of publication and mention of the grant of the patent: **10.08.2005**
(21) Application number: 02765702.2
(22) Date of filing: 10.10.2002
(51) Int. Cl.: F16L 3/233

(54) **THERMOPLASTIC CABLE TIE**
KABELBINDER AUS THERMOPLASTEN
ATTACHE DE CABLE THERMOPLASTIQUE

(30) Priority: 12.10.2001 EP 01203862
(43) Date of publication of application: 07.07.2004
(73) Proprietor: DSM IP Assets B.V., 6411 TE Heerlen (NL)
(72) Inventor: SCHRODER, Christian, NL-6165 BS Geleen (NL); GOERTZ, Henricus, Johannes, Jacobus, NL-6166 HX Geleen (NL); TEUWEN, Lilian, Marie, Jeanne, B-3530 Houthalen (BE)
(74) Representative: Krijgsman, Willem
(86) International application number: PCT/NL2002/000648
(87) International publication number: WO 2003/031858

(56) References cited:
- DE-A- 19 820 600
- US-A- 5 154 964
- US-A- 5 238 631

## Description

The invention relates to a cable tie comprising a flexible strap with a locking head at one end and a tail at the other end, moulded from a thermoplastic composition. The invention also relates to the use of said cable tie in automotive and electrical applications.

Such a thermoplastic cable tie is known from US 4658478 A. In this publication, a cable tie of specific design is moulded from a stretch-orientable thermoplastic material, such as polypropylene, nylon, or polyurethane.

A cable tie, also referred to as tie wrap or as flex tie, is a special binder or fastener, i.e. a device for bundling or harnessing of a plurality of items, like cables or wires; for holding the items together or for fixing items to a support. A cable tie is well known in the art. Within the context of the present invention, a cable tie is understood to be a binder that comprises a flexible strap with a locking head at one end and a tail at the other end, which head generally has a guiding channel with internal locking means, e.g. a pawl or a tongue. The strap typically has at least at one side a serrated surface, like a toothed structure, or a series of apertures and optionally two planar or protuberant side rails along its edges. By feeding the tail through the attached head the cable tie takes the shape of a loop, and by pulling the tail further through the head the strap is sequentially engaged and locked in the head, the strap being incapable of removal once it is inserted in the head. In addition to design specifics of the cable tie, especially of the surface structure of the strap and the head with locking means, also the properties of the thermoplastic composition from which the cable tie is moulded determine its performance profile and application areas. In general, cable ties have a high length/thickness ratio and are injection moulded using multi-cavity moulds. For proper filling of the mould, excellent melt flow behaviour is thus a requirement for the thermoplastic composition. Other requirements include high flexibility on one hand, and good toughness and mechanical strength on the other hand to prevent premature breakage of the fastened strap or slippage from the locking head. For general-purpose applications, polypropylene compositions are typically used. For more demanding applications, however, such as for harnessing of a plurality of electrical wires for connecting particular automotive components to a particular power supply in an automobile and for positioning and securing such an electrical harness to the automobile chassis, additional material properties may become of decisive importance. A typical requirement in this respect, in addition to e.g. chemical resistance to common automotive fluids, is that a fastened cable tie should withstand prolonged exposure to elevated temperatures, e.g. at 125°C, if it is to be applied in or in the vicinity of the engine compartment. At the same time, such a cable tie should show good mechanical strength at low, i.e. sub-zero, temperatures. For such high-end applications cable ties are often moulded from a polyamide composition, for example a plasticized polyamide 11 or 12 composition, or an elastomer-modified polyamide 66 composition.

A drawback of the known cable tie is that it does not fulfil all these requirements simultaneously, and especially does not show enough strength and impact resistance at temperatures down to -30 or even -35 °C. This means that various cable ties of different design and/or made from different thermoplastic compositions need to be used for assembling an electrical harness and mounting it in an automobile. This concurrent use of different types of cable ties is disadvantageous from logistical, manufacturing, and economical points of view.

The object of the invention is therefore to provide a cable tie moulded from a thermoplastic composition, which cable tie does not, or at least to a much lesser extent, show these disadvantages.

This object is achieved according to the invention with a cable tie moulded from a thermoplastic composition that contains at least one block copolyester.

The cable tie moulded from a composition containing at least one block copolyester fulfils several apparently contradictory requirements and can replace several other different cable ties that are used for assembling an electrical harness and mounting it in an automobile. Another advantage of the cable tie according to the invention is that it shows much less variation of mechanical properties in response to changing environmental conditions, like different humidity, than known cable ties made from e.g. polyamide compositions. Still another advantage of the cable tie according to the invention is that it can also be used in other demanding applications, e.g. in outdoor electricity distribution systems where resistance to long-term UV-exposure and wide temperature variations are required.

Within the present application, a block copolyester is understood to be a block copolymer containing soft blocks of a flexible polymer and hard polyester blocks. As alternative to blocks, also the term segments is being used.

In DE 19820600 A1 a plastic binder is described, which plastic comprises a thermoplastic polyester and/or copolyester. The binder described herein, however, is not a cable tie comprising a flexible strap with a locking head at one end and a tail at the other end; and a copolyester according to the description of this publication does not include a block copolyester.

The hard polyester blocks in the block copolyester in the thermoplastic composition from which the cable tie according to the invention is moulded are built up from repeating units derived from at least one alkylene diol and at least one aromatic dicarboxylic acid or an ester-forming derivative thereof. The alkylene diol contains generally 2-6 C-atoms, preferably 2-4 C-atoms. Examples thereof include ethylene glycol, propylene diol and butylene diol. Preferably propylene diol or butylene diol are used, more preferably 1,4-butylene diol. Examples of suitable aromatic dicarboxylic acids include terephthalic acid, 1,4-naphthalenedicarboxylic acid, or 4,4'-biphenyldicarboxylic acid. The hard segments may optionally also contain a minor amount of units derived from other dicarboxylic acids, for example isophthalic acid, which generally lowers the melting point of the polyester. The amount of other dicarboxylic acids is preferably limited to ensure that, among other things, the crystallization behaviour of the block copolyether ester is not adversely affected. Preferably, the amount of other dicarboxylic acids is below 20 mole%, more preferably below 10 mole%. The hard block is preferably built up from ethylene terephthalate or propylene terephthalate repeating units, and in particular from butylene terephthalate units. The advantages thereof include favourable crystallisation behaviour and a high melting point, resulting in block copolyesters with good processing properties and excellent thermal and chemical resistance.

The soft blocks in the block copolyester contain a flexible polymer; that is a substantially amorphous polymer with a low glass-transition temperature (T_{g}). In general the T_{g} of the flexible polymer is below 0°C, preferably the T_{g} is below -20, and more preferably below -40°C. The molar mass of the soft blocks may vary within a wide range, but preferably the molar mass is chosen between 400 and 6000, more preferably between 500 and 4000, and most preferably between 750 and 3000 g/mol.

Examples of suitable soft blocks are blocks derived from polymers like aliphatic polyesters or polycarbonates, or aliphatic polyethers.

Suitable aliphatic polyesters are for example polybutylene adipate and polycaprolactone. Polyhexamethylene carbonate may be used as aliphatic polycarbonate. An example of a suitable aliphatic polyether is a poly(alkylene oxide)diol derived from an alkylene oxide of 2-6 C-atoms, preferably 2-4 C-atoms, or combinations thereof. Examples include poly(ethylene oxide)diol, poly(tetramethylene oxide)diol, poly(propylene oxide)diol and ethylene oxide-terminated poly(propylene oxide)diol.

The block copolyester can further contain a compound with two or more functional groups that can react with an acid- or hydroxyl-group, acting as chain extension or chain branching agent, respectively. Suitable chain extension agents include diisocyanates and bisepoxides. Suitable chain branching agents include e.g. trimellitic acid, trimellitic acid anhydride and trimethylol propane. The amount and type of chain extension or branching agent is chosen such that a block copolyester of desirable melt viscosity is obtained. In general, the amount of a chain branching agent will not be higher than 6.0 equivalents per 100 moles of dicarboxylic acids presenting the block copolymer.

The ratio of soft to hard blocks in the block copolyester may vary between wide limits, but is generally chosen such that a block copolyester of desired hardness and mechanical properties is obtained. The hardness generally lies between about 25 and 80 Shore D, more specifically between about 30 and 75 Shore D.

Examples and preparation of block copolyesters are for example described in Handbook of Thermoplastics, ed. O.Olabishi, Chapter 17, Marcel Dekker Inc., New York 1997, ISBN 0-8247-9797-3, in Thermoplastic Elastomers, 2nd Ed, Chapter 8, Carl Hanser Verlag (1996), ISBN 1-56990-205-4, in Encyclopedia of Polymer Science and Engineering, Vol. 12, Wiley & Sons, New York (1988), ISBN 0-471-80944, p.75-117, and the references cited therein.

The thermoplastic composition containing at least one block copolyester may contain a mixture of two or more block copolyesters that differ for example in hardness or in chemical composition, e.g. type of soft block. The composition can further contain another thermoplastic polymer, for example a thermoplastic elastomer like a block copolymer of styrene and butadiene (SBS), preferably a hydrogenated copolymer thereof (SEBS) in view of its better thermal resistance. The composition can also contain a relatively hard thermoplastic, for example in combination with a block copolyester of low hardness. The advantage of using such mixed compositions from which the cable tie according to the invention is moulded, is that starting from available polymers the properties of the composition may be tuned to a specific design of cable tie and performance requirements. If the at least one block copolyester and other thermoplastic polymer are not compatible, the composition preferably also contains a suitable compatibilizer. Preferably, the composition contains a thermoplastic polymer that is compatible with the hard blocks of the block copolyester; thus avoiding the need for a compatibilizer. For example, in case of a block copolyester with hard blocks based on polybutylene terephthalate the composition preferably contains a polybutylene terephthalate (PBT) as the other thermoplastic polymer. The advantage thereof is that by varying the amounts of block copolyester and PBT especially mechanical properties can easily be tailored to specific application requirements.

In general, the at least one block copolyester forms the major constituent of the composition; that is the composition generally contains at least 50 mass%, preferably at least 60 mass% of the at least one block copolyester. The advantage thereof is a well-balanced combination of flexibility, mechanical strength and toughness, also at low temperatures.

The thermoplastic composition containing at least one block copolyester from which a cable tie according to the invention has been moulded generally has a hardness of between about 25 and 80 Shore D; but the hardness is preferably chosen between about 50 and 75 Shore D, even more preferably between about 60 and 70 Shore D, and most preferably between about 63 and 68 Shore D. The advantage of this selection is that the cable tie shows a good balance of flexibility of the strap and mechanical strength and integrity of the fastened cable tie. For good functioning of a fastened cable tie a certain minimum force is required for opening it again. This opening force is of course dependent on both the design of the cable tie and mechanical properties of the thermoplastic composition. It has now been found that, especially for cable ties that are to be used in demanding applications, the thermoplastic composition should preferably have a yield strength (or tensile strength at yield), as determined in a tensile test according to ISO R37-II / DIN53504 S2, of at least 14 MPa, more preferably at least 18 MPa and even more preferably at least 20 MPa. Preferably, the yield strength is not higher than 30 MPa, more preferably not higher than 26 MPa and even more preferably not higher than 24 MPa, because otherwise the force needed to fasten (close) the cable tie will be too high.

Preferably, the thermoplastic composition from which the cable tie according to the invention has been moulded contains a block copolyether ester, because this results in better sub-zero mechanical properties. More preferably, the polyether soft block is derived from a poly(tetramethylene oxide)diol or a poly(propylene oxide)diol , because this results in favourable mechanical properties down to as low as -35°C and a relatively high melting point of the block copolyether ester. Said poly(tetramethylene oxide)diol or poly(propylene oxide)diol may also be random copolymers comprising up to 50 mole% of other alkylene oxides. Most preferably an ethylene oxide-terminated poly(propylene oxide)diol , i.e. a poly(propylene oxide)diol of which the chain ends are terminated with ethylene oxide units is used as the soft block. The ratio between the number of propylene oxide and ethylene oxide units in such a polyether may vary within a wide range, for example between 20:1 and 1:6, but is preferably between 10:1 and 1:1. Advantages of an ethylene oxide-terminated poly(propylene oxide)diol include a hydroxy-functionality of close to 2.0 and easy copolymerisation into a linear block copolyether ester.

Particularly preferred is a thermoplastic composition containing a block copolyether ester with hard blocks built up from butylene terephthalate units and soft blocks derived from poly(tetramethylene oxide)diol or a poly(propylene oxide)diol, because of its good processing behaviour, chemical- and heat-resistance, and mechanical properties. Even more preferred is a block copolyether ester with hard blocks built up from butylene terephthalate units and soft blocks derived from ethylene oxide-terminated poly(propylene oxide)diol. The advantage thereof is that mechanical properties of the cable tie, e.g. toughness, are retained at very low temperatures; that is even down to about -35 °C, as well as at elevated temperatures, e.g. a Vicat softening point (at load 10 N; ISO306) close to its melting point, which is in the range of 210-220°C.

The thermoplastic composition containing at least one block copolyester may further contain customary additives, like heat- and UV-stabilisers, anti-oxidants, colorants, plasticizers, processing aids or flame retarding compounds. Preferably, the composition contains effective amounts of a heat-stabilisation package and a UV-stabilisation package, enabling application during prolonged times at temperatures of up to for example 125°C, or outdoor application with a service life of over 25 years. Plasticizers may be advantageously used to further improve impact properties and to enhance melt flow.

The thermoplastic composition containing at least one block copolyester can be made using well-known techniques. The composition may be a mere mixture of the various granular or powdery components as prepared in a suitable blending apparatus, also called a dry-blend; but may also be a homogenized compound, as for example prepared by blending the components above the melting temperature of the block copolyester in a suitable apparatus, like an extruder, preferably a twin-screw extruder. After melt blending the components, the composition may be further treated by heating under reduced pressure or under an inert gas stream, so as to effect an increase in the viscosity of the composition, and as a result thereof an increase in mechanical properties. In general, such higher viscosity is not needed or desired for making cable ties according to the invention.

The cable tie according to the invention can be of various different designs, but generally comprises a flexible strap with a tail and a locking head, as indicated above. An example of one type of cable tie is for example disclosed in US 4183119 A. Herein a cable tie is described that comprises a serrated strap with a gripper tail and a locking head containing a guide channel for receiving the strap after encirclement of the items to be harnessed. The serrated strap has side rails that are also proportioned to better grip the encircled items, e.g. by inclusion of serrations on these rails. The flexible strap can have different means for engaging and locking it in the head, like serrations in the form of a toothed structure on only one or on both sides, but can also have a plurality of apertures. In the last case, the locking head will be a buckle-like head with a tongue that engages the strap by entering an aperture thereon. Another example of a suitable cable tie design is described in US 4658478 A. The cable tie described therein includes a specially designed locking head containing a pawl that engages the teeth of a strap by wedging, wherein the form of the teeth may be controlled by stretching the strap while fastening the cable tie. A suitable cable tie may additionally comprise one ore more fasteners coupled to the strap. Such fasteners can be used for attaching an object to the fastened cable tie; for example an unused, free connector of a universal automotive harness as described in US 6102347 A. The invention also relates to the use of a cable tie according to the invention in various automotive and electrical applications, including harnessing of wires and mounting hamessed wires to an automobile chassis, or mounting (harnessed) wires or cables in outdoor electrical systems, like high voltage transportation systems.

The cable tie according to the invention can be made via known injection-moulding processes, although also other moulding processes could be applied.

The invention will now be further elucidated with reference to the following examples.

### Materials

The following materials were used for moulding of cable ties:
- P38: A block copolyether ester of 38 Shore D hardness, built up from butylene terephthalate units (PBT) and ethylene oxide-terminated poly(propylene oxide)diol of molar mass (Mₙ) of about 2300 g/mol (EO-PPO); RSV is 2,8; available as Arnitel® PL380 from DSM Engineering Plastics (NL);
- P58: A block copolyether ester of 58 Shore D hardness, based on PBT and EO-PPO; RSV 2,45; available as Arnitel® PL581 from DSM Engineering Plastics (NL);
- P63: A block copolyether ester of 63 Shore D hardness, based on PBT and EO-PPO;
- P65: A block copolyether ester of 65 Shore D hardness, based on PBT and EO-PPO; RSV 2,45;
- P65B: A block copolyether ester of 65 Shore D hardness, based on PBT and EO-PPO; RSV 2,15;
- P66: A block copolyether ester of 66 Shore D hardness, based on PBT and EO-PPO; RSV 2,05;
- P69: A block copolyether ester of 69 Shore D hardness, based on PBT and EO-PPO; RSV 2,03;
- E63: A block copolyether ester of 63 Shore D hardness, based on PBT and poly(tetramethylene oxide)diol of Mₙ about 1000; available as Arnitel® EL630 from DSM Engineering Plastics (NL); RSV 2,45;
- E66: A block copolyether ester of 66 Shore D hardness, based on PBT and poly(tetramethylene oxide)diol; RSV 2,35;
- E69: A block copolyether ester of 69 Shore D hardness, based on PBT and poly(tetramethylene oxide)diol; RSV 2,20;
- U60: a block copolyester ester of 60 Shore D, with hard segments built up from butylene terephthalate units, soft segments from butylene adipate units, and an di-isocyanate;
- PBT: A polybutylene terephthalate of Mₙ about 16000; RSV 1,85.

Thermoplastic compositions of the Examples I-XIX presented in Table 1 and 2 were either dry blends or compounds of indicated materials, and contain an effective amount of a heat- and UV stabilisation package and a carbon black masterbatch.

### Moulding and evaluation

Yield strength (tensile strength at yield) of indicated samples was determined on injection moulded specimen in a tensile test, all according to ISO R37-II / DIN53504 S2. Results are depicted in Table 1.

Relative solution viscosity (RSV) of a sample is measured on a 1,0 mass% solution of polymer in m-cresol at 25,0 ± 0,05 °C.

The melt viscosity of sample P65 (Ex. VII) was determined to be about 1050 Pa.s and about 500 Pa.s at 250°C and shear rate of 1 and 100 rad/s, respectively.

All materials were injection moulded using multi-cavity moulds (at least 24 cavities) into cable ties with different locking head design and different lengths (up to approximately 40 cm). Standard injection moulding conditions were used; i.e. a temperature setting of about 230-240 °C (from hopper to nozzle), resulting in a melt temperature of about 235-250 °C. All cavities were properly filled, with only very little flash observed, indicating good melt flow properties.

In a first series of experiments two cable ties of differently designed locking heads and serrations on the tail were made (indicated as cable tie 1 and 2 in Table 1). Subsequently the force needed to close (or fasten) the cable tie (closing force) was determined, as well as the maximum force that the fastened cable tie could withstand before opening again (opening force). For easy fastening, the closing force is preferably not be higher than 60, more preferably not higher than 50 N. The opening force is preferably at least 500 N, or even at least 530 N. Test results are listed in Table 1. The opening force is generally considered a more stringent requirement than closing force.

Cold impact resistance of cable ties was measured by a falling weight test on moulded cable ties at varying temperatures. For demanding applications, no breakage of the cable tie should occur at a temperature of -30°C or below.

In a second series of tests, two cables of slightly different design and strap length were made, indicated as cable tie 3 and 4 in Table 2. Target values for closing force are not higher than 50 N for cable tie 3, and not higher than 40 N for cable tie 4. The opening force is preferably at least 500 N or even at least 530 N for cable tie 3; preferably at least 360 N for cable tie 4. For cable tie 4, a cold impact test was performed in accordance with the recently standardized test procedure NF EN 50146. It is indicated in Table 2 that the samples passed these test at -30°C.

From the results presented in Table 1 and 2, it can be concluded that all tested cable ties made from compositions containing block copolyester perform well in at least some respect. For more demanding applications the Examples II, VII, VIII, XVII, XVII and XIX appear to offer the best performance, with Ex. VII, XVIII, and XIX, all based on a P65 material, being preferred.

**Table 1**

| Example | Thermoplastic composition (mass ratio) | Yield strength (MPa) | Cable tie 1 | | Cable tie 2 | | Cold impact Cable tie 1 -30°C |
|---|---|---|---|---|---|---|---|
| | | | Closing force (N) | Opening force (N) | Closing force (N) | Opening force (N) | |
| I | P38 / PBT | 15,3 | -- | 410 | -- | -- | - |
| | (63/37) | | | | | | |
| II | P58 / PBT | 22,0 | 71 | 580 | 60 | 540 | passed |
| | (70/30) | | | | | | |
| III | P58 / PBT | 20,5 | 57 | 481 | -- | -- | -- |
| | (80/20) | | | | | | |
| IV | E63 / PBT | 21,6 | 84 | 574 | -- | -- | passed |
| | (85/15) | | | | | | |
| V | E63 / PBT | 23,6 | 88 | 595 | -- | -- | passed |
| | (78/22) | | | | | | |
| VI | P63 | 18,8 | -- | 477 | -- | -- | passed |
| VII | P65 | 20,7 | 62 | 538 | 52 | 493 | passed |
| VIII | P66 | 22,8 | 70 | 600 | 51 | 550 | -- |
| IX | P69 | 25,8 | 80 | 676 | -- | -- | -- |
| X | E66 | 18,7 | 62 | 499 | -- | -- | passed |
| XI | E69 | 23,5 | 76 | 628 | -- | -- | passed |
| -- : not determined | | | | | | | |

**Table 2**

| Example | Thermoplastic composition (mass ratio) | Cable tie 3 | | Cable tie 4 | | Cold impact NF EN 50146 Cable tie 4 -30°C |
|---|---|---|---|---|---|---|
| | | Closing force (N) | Opening force (N) | Closing force (N) | Opening force (N) | |
| XII | P58 | 37 | 383 | 38 | 370 | pass |
| XIII | U60 | 21 | 363 | 17 | 322 | pass |
| XIV | E63 | 41 | 456 | 45 | 390 | pass |
| XV | P58 / PBT (90/10) | 40 | 414 | 29 | 364 | pass |
| XVI | P58 / PBT (80/20) | 41 | 459 | 33 | 382 | pass |
| XVII | P58 / PBT (70/30) | 42 | 506 | 39 | 414 | pass |
| XVIII | P65 | 58 | 552 | 52 | 420 | pass |
| XIX | P65B | 43 | 527 | 46 | 433 | pass |

## Claims

1. Cable tie comprising a flexible strap with a locking head at one end and a tail at the other end, moulded from a thermoplastic composition, **characterised in that** the thermoplastic composition contains at least one block copolyester.

2. Cable tie according to claim 1, wherein the block copolyester contains hard blocks built up from butylene terephthalate units.

3. Cable tie according to any one of claims 1-2, wherein the composition also contains polybutylene terephthalate.

4. Cable tie according to any one of claims 1-3, wherein the composition contains at least 50 mass% of at least one block copolyester.

5. Cable tie according to any one of claims 1-4, wherein the composition has a yield strength of between 18 and 26 MPa as measured in a tensile test according to ISO-R37-II / DIN53504 S2.

6. Cable tie according to anyone of claims 1-5, wherein the block copolyester is a block copolyether ester.

7. Cable tie according to claim 6, wherein the block copolyether ester contains soft blocks derived from an ethylene oxide-terminated poly(propylene oxide)diol.

8. Cable tie according to any one of claims 1-7, wherein the block copolyester contains hard blocks built up from butylene terephthalate units and soft blocks derived from ethylene oxide-terminated poly(propylene oxide)diol.

9. Cable tie according to any one of claims 1-8, wherein the composition further contains effective amounts of a heat-stabilisation package and a UV-stabilisation package.

10. Use of a cable tie according to any one of claims 1-9 in automotive and electrical applications.

## Patentansprüche

1. Kabelbinder, umfassend ein flexibles Band mit einem Verrastungskopf an einem Ende und einem Schwanz an dem anderen Ende, geformt aus einer thermoplastischen Zusammensetzung, **dadurch gekennzeichnet, daß** die thermoplastische Zusammensetzung mindestens einen Blockcopolyester enthält.

2. Kabelbinder gemäß Anspruch 1, wobei der Blockcopolyester harte Blöcke, aufgebaut aus Butylenterephthalateinheiten, enthält.

3. Kabelbinder gemäß einem der Ansprüche 1-2, wobei die Zusammensetzung auch Polybutylenterephthalat enthält.

4. Kabelbinder gemäß einem der Ansprüche 1-3, wobei die Zusammensetzung mindestens 50 Masse-% von mindestens einem Blockcopolyester enthält.

5. Kabelbinder gemäß einem der Ansprüche 1-4, wobei die Zusammensetzung eine Dehnspannung von zwischen 18 und 26 MPa, wie in einem Spannungstest gemäß ISO-R37-II/DIN53504 S2 gemessen, aufweist.

6. Kabelbinder gemäß einem der Ansprüche 1-5, wobei der Blockcopolyester ein Blockcopolyetherester ist.

7. Kabelbinder gemäß Anspruch 6, wobei der Blockcopolyetherester weiche Blöcke, abgeleitet von einem Ethylenoxid-terminierten Poly(propylenoxid)diol, enthält.

8. Kabelbinder gemäß einem der Ansprüche 1-7, wobei der Blockcopolyester harte Blöcke, aufgebaut aus Butylenterephthalateinheiten, und weiche Blöcke, abgeleitet von Ethylenoxid-terminiertem Poly(propylenoxid)diol, enthält.

9. Kabelbinder gemäß einem der Ansprüche 1-8, wobei die Zusammensetzung weiter wirksame Mengen einer Wärmestabilisierungspackung und einer UV-Stabilisierungspackung enthält.

10. Verwendung eines Kabelbinders gemäß einem der Ansprüche 1-9 in Kraftfahrzeug- und elektrischen Anwendungen.

## Revendications

1. Attache de câble comprenant une courroie flexible avec une tête de verrouillage à une extrémité et une queue à l'autre extrémité, moulée à partir d'une composition thermoplastique, **caractérisée en ce que** la composition thermoplastique contient au moins un copolyester séquencé.

2. Attache de câble selon la revendication 1, dans laquelle le copolyester séquencé contient des séquences dures formées de motifs de téréphtalate de butylène.

3. Attache de câble selon l'une quelconque des revendications 1 et 2, dans laquelle la composition contient aussi du polytéréphtalate de butylène.

4. Attache de câble selon l'une quelconque des revendications 1 à 3, dans laquelle la composition contient au moins 50 % en poids d'au moins un copolyester séquencé.

5. Attache de câble selon l'une quelconque des revendications 1 à 4, dans laquelle la composition a une limite d'élasticité entre 18 et 26 MPa, mesurée dans un essai de traction selon les normes ISO-R37-II/DIN53504 S2.

6. Attache de câble selon l'une quelconque des revendications 1 à 5, dans laquelle le copolyester séquencé est un copolyéther ester séquencé.

7. Attache de câble selon la revendication 6, dans laquelle le copolyéther ester séquencé contient des séquences souples dérivées d'un poly(oxyde de propylène)diol à terminaison oxyde d'éthylène.

8. Attache de câble selon l'une quelconque des revendications 1 à 7, dans laquelle le copolyester séquencé contient des séquences dures formées de motifs de téréphtalate de butylène et des séquences souples dérivées de poly(oxyde de propylène)diol à terminaison oxyde d'éthylène.

9. Attache de câble selon l'une quelconque des revendications 1 à 8, dans laquelle la composition comprend en outre des quantités efficaces d'un conditionnement de stabilisation thermique et d'un conditionnement de stabilisation aux UV.

10. Utilisation d'une attache de câble selon l'une quelconque des revendications 1 à 9 dans des applications automobiles et électriques.
